# EUROPÄISCHE PATENTANMELDUNG

(11) **EP 1 127 787 A2**
(43) Veröffentlichungstag der Anmeldung: **29.08.2001**
(21) Anmeldenummer: 01103620.9
(22) Anmeldetag: 22.02.2001
(51) Int. Cl.: B64D 1/14

(54) **Lastenabwurf-Plattform zur Dämpfung von Lasten beim Lastenabwurf**

(30) Priorität: 25.02.2000 DE 10008915
(71) Anmelder: EADS Deutschland GmbH, 81663 München (DE)
(72) Erfinder: Mahnken, Norbert, Dr., 83059 Kolbermoor (DE)

(57) **Zusammenfassung**

Lastenabsetz-Plattform (1) zur Dämpfung von Lasten beim Lastenabwurf mit einer oberen Platte (5), die mit zumindest einem sich in der Flugphase öffnenden Schirm verbunden ist, mit einer unteren Platte (7), wobei die obere (5) und die untere (3) Platte mittels eines Scherengestänges (9) miteinander verbunden sind, mit zumindest einem Dämpferelement (30) mit einem Gewebemantel (35), der einerseits an der oberen Platte (5) und andererseits an der unteren Platte (7) befestigt ist und einen Durchlaßring (37) aufweist, so daß die von dem Gewebemantel (35) umgrenzten Kreisflächen der oberen Platte (5) und der unteren Platte (7) sowie die Innenseite des Gewebemantels (35) einen Innenraum bilden.

## Beschreibung

Die Erfindung betrifft eine Lastenabwurf-Plattform zum Dämpfen von Lasten beim Lastenabwurf aus Luftfahrzeugen, die nach dem Abwurf bis zum Aufsetzen von einem Schirmsystem getragen wird.

Derartige aus dem Stand der Technik bekannte, von Schirmen getragene Lastenabwurf-Plattform weisen eine Platte auf, auf die die abzuwerfende Last, beispielsweise ein Landfahrzeug, festgezurrt wird. Zwischen der Last und der Platte sind eine Vielzahl von Dämpfungselementen eingepaßt, die beim Auftreffen der Platte mit der Last aufgrund der Gewichtskraft und der Trägheitskraft irreversibel zusammengedrückt werden. Ein Nachteil dieser Lastenabwurf-Plattformen ist, daß die Dämpfungselemente an den Stellen, an denen die Last auf der Platte aufliegt, möglich formschlüßig zwischen Platte und Last angeordnet sein müssen, um die beim Auftreffen der Lastenabwurf-Plattform auf dem Boden wirkenden Kräfte unmittelbar aufzunehmen und der Last auf der Platte keinen ungünstigen Bewegungsspielraum zu gewähren. Ein weiterer Nachteil des Stands der Technik ist, daß die Dämpfungselemente nicht wiederverwendbar sind. Auch ist ein Nachteil, daß die erzielbare Dämpfung von der Form der auf der Platte anzubringenden Last abhängt. Dadurch kann die erzielte Dämpfung beim Auftreffen der Palette am Boden nicht genau genug vorhergesagt werden, so daß zur Gewährleistung ausreichender Sicherheit ein unnötig großer Dämpfungsaufwand geleistet werden muß.

Es ist daher die Aufgabe der Erfindung, eine Lastenabwurf-Plattform zum Dämpfen von Lasten beim Lastenabwurf zu schaffen, die einfach gebaut und wiederverwendbar ist.

Diese Aufgabe wird mit den Merkmalen des unabhängigen Anspruchs 1 gelöst. Weitere Ausführungsformen sind in den Unteransprüchen angegeben.

Die erfindungsgemäße Lastenabsetz-Plattform weist durch die erfinderische Lösung einen aktivierbaren Dämpfungsmechanismus auf, der gewährleistet, daß auch empfindliche Lasten beschädigungsfrei gelandet werden können. Die Lastenabwurf-Plattform ist nach der Landung leicht handhabbar, so daß die Last leicht von der Plattform entfernt werden kann. Ein weiterer Vorteil ist, daß die erfindungsgemäße Lastenabsetz-Plattform wiederverwendbar ist.

In folgenden wird die Erfindung anhand der beiliegenden Figuren beschrieben, die zeigen:
- Figur 1 eine perspektivische Darstellung der erfindungsgemäßen Lastenabsetz-Plattform im auseinandergefahrenen Zustand, den die Plattform kurz vor dem Auftreffen am Boden zur Gewährleistung einer ausreichenden Dämpfung der mit geführten Last aufweisen muß, wobei die obere Platte durchsichtig gezeichnet ist
- Figur 2 eine perspektivische Darstellung der Lastenabsetz-Plattform in ihrem eingefahrenen Zustand, wobei die obere Platte durchsichtig gezeichnet ist,
- Figur 3 eine Ansicht der Lastenabsetz-Plattform von vorne oder in X-Richtung gesehen, wobei sich die Lastenabsetz-Plattform in ihrem ausgefahrenen Zustand der Figur 1 befindet, mit einer ersten Ausführungsform von Dämpfungselementen,
- Figur 4 die Lastenabsetz-Plattform der Figur 3 in ihrem eingefahrenen Zustand ebenfalls von vorne gesehen,
- Figur 5 eine Ansicht der Lastenabsetz-Plattform der Figur 1 von der Seite oder in Y-Richtung gesehen in ihrem ausgefahrenen Zustand mit der ersten Ausführungsform von Dämpfungselementen,
- Figur 6 die Lastenabsetz-Plattform in der Darstellung der Figur 5 in ihrem eingefahrenen Zustand,
- Figur 7 das Dämpfungselement in einer ersten Ausführungsform im ausgefahrenen Zustand,
- Figur 8 das Dämpfungselement der Figur 7 in seinem eingefahrenen Zustand,
- Figur 9 eine zweite Ausführungsform eines Dämpfungselements in ihrem ausgefahrenen Zustand,

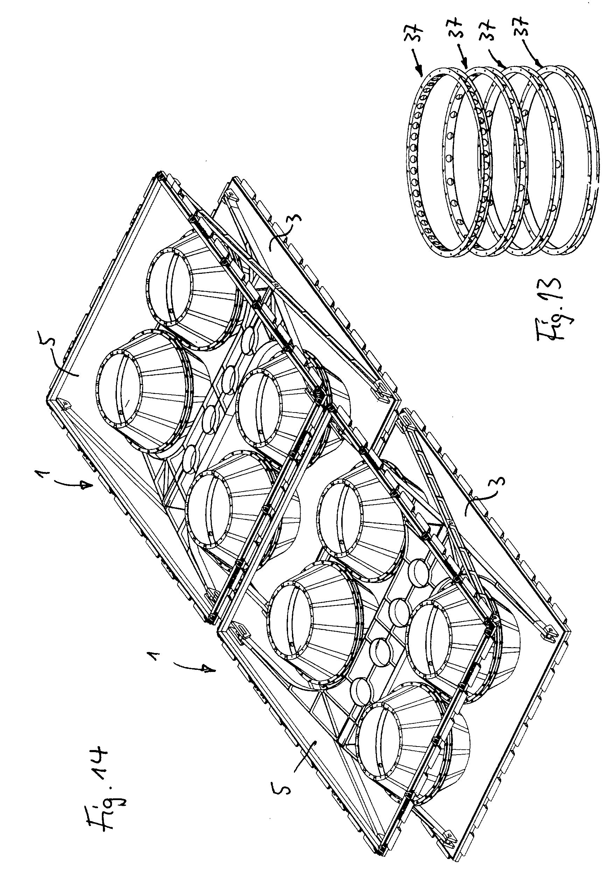

- Figur 10 das Dämpfungselement der Figur 9 in seinem eingefahrenen Zustand,
- Figur 11 eine dritte Ausführungsform des Dämpfungselements in seinem ausgefahrenen Zustand,
- Figur 12 das Dämpfungselement der Figur 11 in seinem eingefahrenen Zustand,
- Figur 13 verschiedene Varianten des Luftdurchlassrings, der in den erfindungsgemäßen Dämpfungselementen verwendet wird,
- Figur 14 eine Kombination von zwei erfindungsgemäßen Lastenabsetz-Plattformen zum Absetzen in größere Lasten.

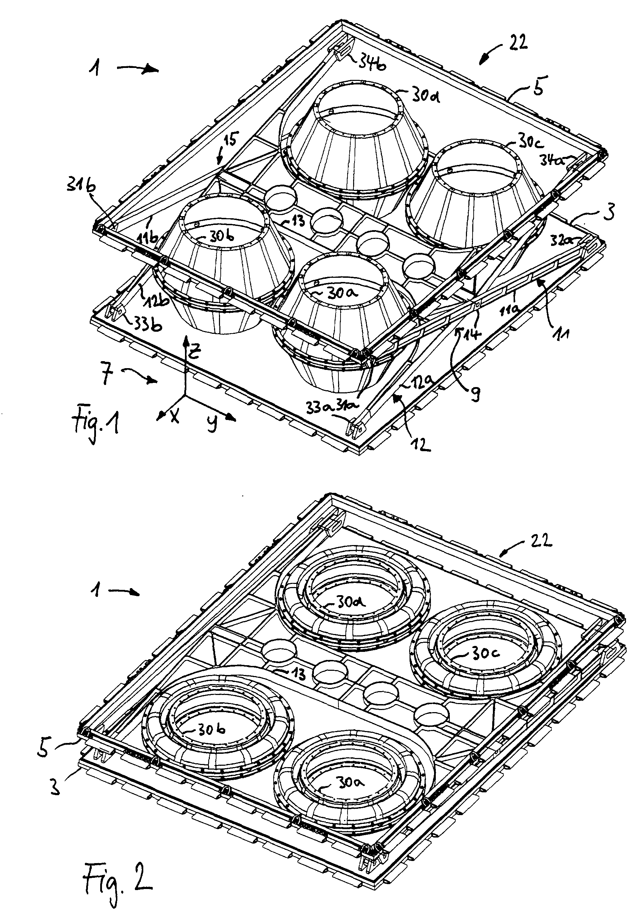

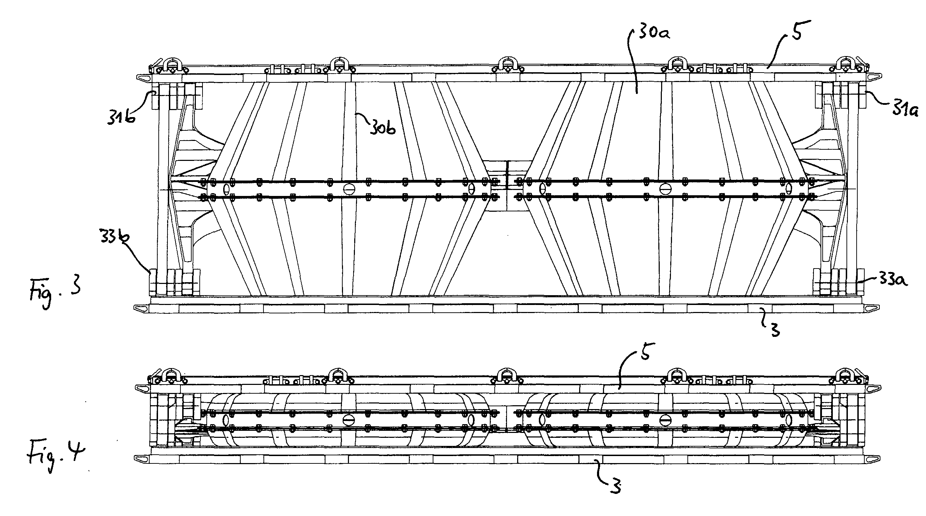

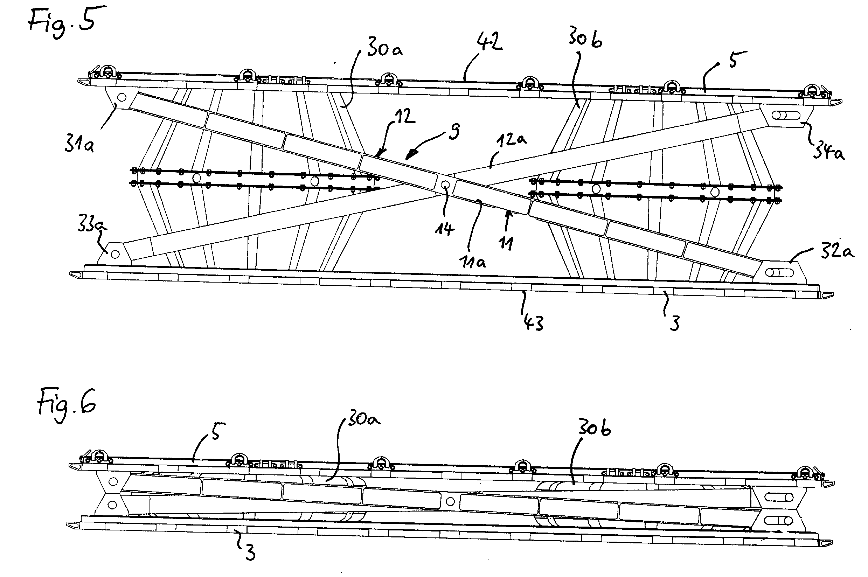

Die in den Figuren 1 bis 6 dargestellte erfindungsgemäße Lastenabsetz-Plattform 1 wird nach ihrem Abwurf vom Luftfahrzeug, also auch nach einer ersten Flugphase, bis zum Aufsetzen am Boden von einem Schirmsystem getragen. Das Schirmsystem kann ein selbststeuerndes oder ferngesteuertes Gleitschirmsystem oder ein Rundkappensystem mit einem oder mehreren Schirmen sein. Ein solches Schirmsystem ist in den Figuren nicht gezeigt.

Die Lastenabsetz-Plattform 1 weist eine untere Platte 3 und eine obere Platte 5 auf. Zur Definition der im weiteren Verlauf der Beschreibung verwendeten Die Lastenabsetz-Plattform 1 weist eine untere Platte 3 und eine obere Platte 5 auf. Zur Definition der im weiteren Verlauf der Beschreibung verwendeten Richtungen ist in der Figur 1 ein Koordinatensystem 7 angegeben, das die X- oder Längs-Richtung, die Y- oder Seiten-Richtung und die Z- oder Höhen-Richtung definiert. An der oberen Platte 5 ist ein Schirmsystem in üblicher Weise befestigt, so daß sich der nach dem Abwurf ausgefahrene Schirm von der oberen Platte 5 aus gesehen in positiver y-Richtung befindet. Die untere 3 und die obere 5 Platte sind über ein Scherengestänge 9 auseinander- und zusammenfahrbar verbunden. Dabei ist das Scherengestänge 9 so beschaffen, daß dieses Schubkräfte, d. h. Kräfte in der X/Y-Ebene aufnimmt. Derartige Kräfte können dadurch beim Aufprall der erfindungsgemäßen Lastenabsetz-Plattform nicht dazu führen, daß sich die obere Platte 5 in X- oder Y-Richtung zur unteren Platte 3 verschiebt und das gesamte gebildete Lastenabsetz-Plattform 1 beim Landen verzehrt. Vorzugsweise ist das Scherengestänge 9 aus einem ersten Strebenpaar 11 mit einer ersten Strebe 11a und einer zweiten Strebe 11b sowie aus einem zweiten Strebenpaar 12 mit einer ersten Strebe 12a und einer zweiten Strebe 12b gebildet. Dabei kann zumindest eines der Strebenpaare 11 bzw. 12 quer zur Scherenbewegung mit einer Versteifung 13 verstärkt sein, um die Lastenabsetz-Pattform 1 im Aufprall gegen die Schubkräfte zu stabilisieren. Die jeweils erste Strebe 11a, 12a ist mit der jeweils zugehörigen zweiten Strebe 11b bzw. 12 b über ein mittig vorgesehenes Drehlager 14, 15 drehbar verbunden. Die beiden Streben eines Strebenpaars verlaufen jeweils parallel zueinander, wobei die beiden Streben 11a, 11b bzw. 12a, 12b eines Strebenpaars 11 bzw. 12 jeweils an gegenüberliegenden Seitenrändern der unteren Platte 3 bzw. oberen Platte 5 verlaufen. An der vorderen Seite 21 für Lastenabsetz-Plattform 1 sind die jeweiligen Enden des ersten 11 und zweiten 12 Strebenpaars in Drehlagern 21 an der unteren 3 bzw. oberen 5 Platte drehbar gelagert. An der der vorderen Seite 21 gegenüberliegenden hinteren Seite 22 der Lastenabsetz-Plattform 1 sind die jeweiligen Enden der Streben 11a, 11b bzw. 12a, 12b jedes Streben paars 11 bzw. 12 in jeweils einer Kulisse gelagert, die paarweise zum einen am jeweiligen Ende der unteren Platte 3 sowie am jeweiligen Ende der oberen Platte 5 vorgesehen sind. Durch die Kulissen wird der Längenanteil der einzelnen Streben der Strebenpaare 11,12, der durch die relative Z-Verschiebung der oberen Platte 5 zur unteren Platte 3 auftritt, ausgeglichen.

Im einzelnen ist die erste Strebe 11a des ersten Strebenpaars 11 mit seinem einen Ende in einem ersten Drehlager 31a an der oberen Platte 5 drehbar gelagert und mit seinem anderen Ende in der Kulisse 32a an der unteren Platte 3 drehbar sowie beschränkt längsverschieblich gelagert. In analoger Weise ist die zweite Strebe 11b des ersten Strebenpaars 11 mittels eines Lagers 31b an der oberen Platte 5 und mittels einer Kulisse 32b (nicht gezeigt) an der unteren Platte 3 gelagert. Die erste Strebe 12a des zweiten Strebenpaars 12 sowie die zweite Strebe 12b des zweiten Strebenpaars 12 sind mit ihrem jeweils einen Ende in jeweils einem Drehlager 33a bzw. 33b an der unteren Platte 3 und mit ihren anderen Enden in entsprechenden Kulissen 34a bzw. 34b beschränkt längsverschiebliche und drehbar an der oberen Platte 5 gelagert. Die Drehlager 31a, 31b, 33a, 33b können gegen die Kulissen 32a, 32b, 34a, 34b vertauscht sein, solange das beschriebene Funktionsprinzip erhalten bleibt.

Durch das beschriebene Scherengestänge 9 sind also die untere Platte 3 gegenüber der oberen Platte 5 in Parallelbewegung auseinander bzw. ineinander fahrbar. Der Scherengestänge 9 kann auch anders nach dem Stand der Technik gebildet sein, solange die beschriebene Funktionsweise erhalten bleibt. Beispielsweise können die Kulissen 32a, 32b, 34a, 34b durch Drehlager ersetzt werden, wenn die Streben der Strebenpaare 11, 12 teleskopartig, beispielsweise mittels Federdämpfern ausgebildet sind. Das Scherengestänge 9 bewirkt, daß die obere Platte 5 gegenüber der unteren Platte 3 in der X/Y-Ebene nicht gegeneinander verschiebar sind. Die optional vorgesehene Versteifung verleiht dem Scherengestänge 9 eine zusätzliche Stabilität. Die obere 5 und die untere 3 Platte sind nur in der Z-Richtung gegeneinander beweglich. Zwischen der oberen 5 und der unteren Platte 3 sind mehrere Dämpferelemente 30 befestigt. Im beschriebenen Ausführungsbeispiel der Figuren 1 bis 6 sind insgesamt 4 Dämpferelemente 30a, 30b, 30c, 30d vorgesehen, die symmetrisch zwischen der unteren 3 und der oberen Platte 5 angeordnet sind. Dabei sind jeweils zwei Dämpferelemente 30a, 30b bzw. 30c, 30d auf jeweils eine Seite der Versteifungsplatte 13 angeordnet.

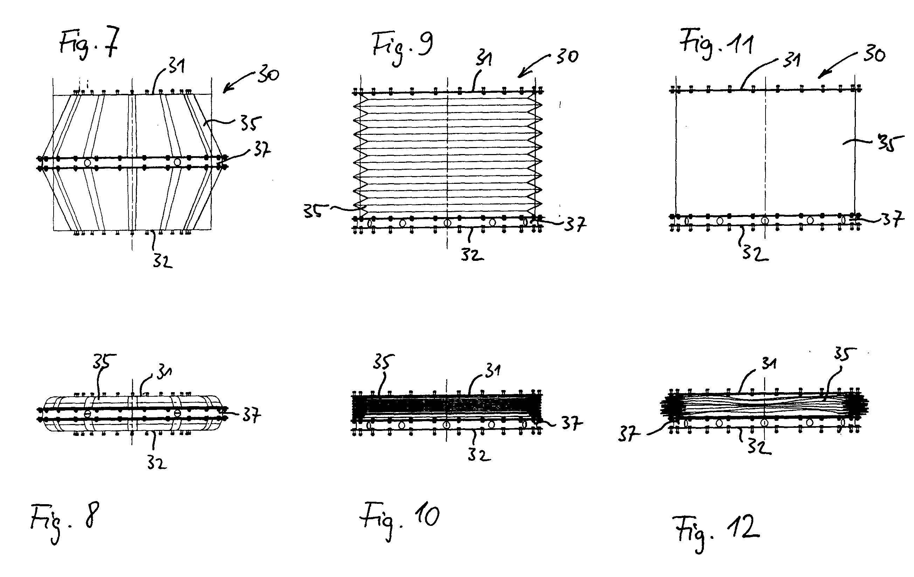

Jedes Dämpferelement 30 weist einen oberen Befestigungsring 31 und einen unteren Befestigungsring 32 auf, die jeweils mittels Befestigungselementen 33 an der oberen Platte 5 bzw. der unteren Platte 4 befestigt sind. An dem oberen 31 und dem unteren Befestigungsring 32 ist über den Umfang derselben ein luftdurchlässiges oder luftundurchlässiges Gewebe 35 in form eines Gewebemantels befestigt, das den von den Befestigungsringen 31, 32 umgrenzten Flächen der oberen 5 und unteren 3 Platte zwischen diesen einen Luftraum bildet. Da die Platten 3, 5 auseinanderfahrbar sind, hängt die Größe des Luftaums von der relativen Stellung der Platten 3, 5 ab. Im auseinandergefahrenen Zustand der Platten 3, 5 bildet das Gewebe 35 ein rotationssymmetrisches Gebilde. Die Befestigungsringe 31 bzw. 32 sind dabei nahezu luftdicht an der oberen 5 bzw. unteren 3 Platte angebracht. Im Bereich zwischen dem oberen 31 und dem unteren 32 Befestigungsring ist ein Durchlaßring 37 in das Gewebe 35 eingebaut. Der Durchlaßring 37 weist mehrere über den Umfang gleichmäßig verteilte Durchlaßbohrungen 39 auf, durch die bei Auseinanderfahren der unteren 3 und oberen Platte 5 Luft in den sich dann vergrößernden Luftraum einströmen und bei Zusammenfahren der Platten 3, 5 Luft entweichen kann. Der Durchlaßring 37 kann mittig zwischen dem oberen 31 und dem unteren 32 Befestigungsring angeordnet sein. Alternativ dazu kann der Durchlaßring 37 auch in der Nähe des oberen 31 oder unteren Befestigungsring 32 oder direkt an diesen angeordnet sein. Letzte Alternative ist in den Figuren 9 und 11 dargestellt. Die zumindest eine Durchlaßbohrung 39 kann jedoch auch auf andere Weise am Dämpferelement 30, also nicht an dem Durchlaßring 37, vorgesehen sein, solange die beschriebene Funktion erfüllt wird. Auch können die Befestigungsringe 31, 32 entfallen, wenn der Gewebemantel 35 an den Platten 3, 5 direkt befestigt, also z.B. aufgeklebt ist.

Das Gewebe 35 nach der Figur 7 ist aus mehreren Teilen zusammengesetzt, die überlappend gegeneinander aufvulkanisiert sind. Die dadurch sich ausbildenden Überlappungssteifen verlaufen vorzugsweise in Längsrichtung, d.h. in Richtung der Relativbewegungen der unteren 3 und oberen 5 Platte. Dadurch läßt sich ebenso wie beim Faltenbalg-Zylinder ein vorhersagbares Faltverhalten erzielen. Es kann jedoch auch gefaltet sein, wie es in der Figur 9 dargestellt ist. Im ausgefahrenen Zustand bildet das Gewebe 35 dann einen sogenannten Faltenbalg-Zylinder. Nachteilig an dieser Ausführungsform ist, daß ein Faltenbalg-Zylinder kostenaufwendig und in einigen Ausführungsformen weniger robust als die verglichenen Alternativen der Figuren 7, 8 und 12, 13 ist. Das Gewebe 35 kann auch glatt und über die Höhe sowie über den Umfang einheitlich, d.h. ohne Falten und aus einem Stück ausgebildet sein (Figur 11). Der geringste Aufwand ergibt sich bei dem Gewebe nach der Figur 11, daß jedoch ein nicht vorhersehbares Faltverhalten beim Einfahren der erfindungsgemäßen Dämpferelemente 30 aufweist.

Die erfindungsgemäße Lastenabsetz-Plattform 1 weist an ihrer oberen Platte 5 mehrere Beschläge 41 auf, um die abzusetzende Last (nicht gezeigt) an der oberen Platte 5 zu befestigen oder fest zu zurren. Die Beschläge 41 können in Form von Ösen angeordnet sein und sind vorzugsweise gleichmäßig entlang der Seitenränder 42 der oberen Platte 5 angeordnet. Weiterhin können enlang der Seitenränder 42 der oberen Platte 5 weitere Befestigungsmittel oder Ösen zur Potitionierung der Lastenabsetz-Plattform 1 vorgesehen sein.

Vorzugsweise ist die Lastenabsetz-Plattform 1 so gestaltet, daß diese mit anderen Lastenabsetz-Plattformen gleicher Bauform zusammen koppelbar sind. Hierzu sind entsprechende Befestigungs- bzw. Verbindungselemente entlang der Seitenränder 42 der oberen Platte 5 sowie entlang der Seitenränder 43 der unteren Platte 5 vorgesehen. In den Figuren 14 und 15 ist dargestellt, wie zwei Lastenabsetz-Plattformen 1 nach der Erfindung zusammengekoppelt sind.

Im Betrieb wird die erfindungsgemäße Lastenabsetz-Plattform 1 alleine oder in Kombination mit zumindest einer weiteren Lastenabsetz-Plattform 1 zusammen mit der auf ihr montierten, abzusetzenden Last vom Luftfahrzeug aus abgeworfen. Innerhalb eines vorbestimmten Zeitraums oder innerhalb eines vorbestimmten Höhenbereichs wird ein mit der oberen Platte 5 verbundener Schirm oder ein Schirmsystem mit üblichen Mitteln geöffnet. Da dann an der oberen Platte 5 eine Bremskraft der Schirms bzw. der Schirme in positiver y-Richtung angreift, werden die obere 5 und die untere 3 Platte auseinander gezogen. Dies kann auch erst nach der Entriegelung einer zwischen der unteren 3 und der oberen 5 Platte wirkenden Verriegelungsvorrichtung (nicht gezeigt) erfolgen. Durch das Auseinanderziehen der Platten 3, 5 wird auch das zumindest eine Dämpferelement 30a, 30b, 30c, 30d auseinander gezogen, wodurch sich dieses bzw. diese mit Luft füllen, die durch die zumindest eine Durchlaßbohrung 37 in das zumindest eine Dämpferelement einströmt. Beim Auftreffen der Absetz-Plattform 1 mit der Last auf dem Boden bewirkt das zuinest eine mit Luft gefüllte Dämpferelement die geforderte Dämpfung der Last, da bei diesem Vorgang Luft durch die zumindest eine Durchlaßbohrung 37 entweicht. Dabei können die Elastizität der Luft sowie die Flexibilität des zumindest einen Dämpferelements die Dämpfungswirkung unterstützen. Das Maß der Dämpfung ist also vom Maß der Luftdurchlässigkeit des Gewebes (35) sowie von der Gestaltung des Durchlaßrings (37) und der Zahl der Dämpferelemente (30) abhängig.

Um die durch die Dämpferelemente erzielte Wirkung anzpassen oder zu verbessern können zwischen der unteren 3 und der oberen 5 Platte Federelemente, z.B. Gasdruckfedern angeordnet sein.

## Patentansprüche

1. Lastenabsetz-Plattform (1) zur Dämpfung von Lasten beim Lastenabwurf mit einer oberen Platte (5) zur Aufnahme der Last und mit einer unteren Bodenaufsetzplatte (3), wobei zwischen der oberen Platte (5) und der Bodenaufsetzplatte (3) zumindest ein Luftdämpferelement (30) angeordnet ist mit einem einen Innenraum ausbildenden Gewebemante (35), welcher an der oberen Platte (5) einerseits und an der Bodenaufsetzplatte (3) andererseits befestigt ist und mit seitlichen Durchlassöffnungen (39), wobei das Volumen des Innenraumes sich in Abhängigkeit der relativen Lage der oberen Platte (5) zur Bodenaufsetzplatte (3) verändert, so dass Luft einströmt, wenn sich der Abstand der Platten voneinander vergrößert und Luft zur Erzielung der Dämpfungswirkung aus dem Innenraum verdrängt wird, wenn die Platten zusammengedrückt werden, dadurch gekennzeichnet, dass die obere Platte (5) und die Bodenaufsetzplatte (7) mittels eines Scherengestänges (9) miteinander so verbunden sind, dass die beiden Platten nur in paralleler Lage, in vertikaler Richtung gegeneinander beweglich sind und wobei die obere Platte mit einem sich beim Lastenabwurf in der Flugphase öffnenden Schirm verbunden ist, dessen sich auf die obere Platte (5) auswirkende Bremskraft zum Auseinanderziehen der Platten (3, 5) eingesetzt wird.

2. Lastenabsetz-Plattform zur Dämpfung von Lasten beim Lastenabwurf nach Anspruch 1, dadurch gekennzeichnet, dass der zumindest eine Schirm ein selbststeuerndes oder ferngesteuertes Gleitschirmsystem ist.

3. Lastenabsetz-Plattform zur Dämpfung von Lasten beim Lastenabwurf nach Anspruch 1, dadurch gekennzeichnet, dass der zumindest eine Schirm ein Rundkappensystem mit einem Schirm oder mehreren Schirmen ist.

4. Lastenabsetz-Plattform zur Dämpfung von Lasten beim Lastenabwurf nach einem der voranstehenden Ansprüche, dadurch gekennzeichnet, dass das Luftdämpferelement (30) ein rotationssymmetrischer Hohlkörper ist, so dass die von seinem Gewebemante (35) umgrenzten Stirnflächen an den Platten (3, 5) Kreisflächen sind und der Mantel einen Durchlassring (37) aufweist, in dem die Durchlassöffnungen (39) vorgesehen sind.

5. Lastenabsetz-Plattform zur Dämpfung von Lasten beim Lastenabwurf nach einem der voranstehenden Ansprüche, dadurch gekennzeichnet, dass der Gewebemantel (35) an der oberen (5) und an der unteren (3) Platte mittels jeweils einen Befestigungsrings (31, 32) befestigt und einheitlich über den Umfang und die Höhe des Dämpferelements (30) ausgebildet ist und daß der Durchlaßring (37) neben einem ersten der Befestigungsringe (31,32) angeordnet ist.

6. Lastenabsetz-Plattform zur Dämpfung von Lasten beim Lastenabwurf nach dem Anspruch 5, dadurch gekennzeichnet, dass ein weiterer Durchlaßring (37) an dem zweiten der Befestigungsringe (31,32) vorgesehen ist.

7. Lastenabsetz-Plattform zur Dämpfung von Lasten beim Lastenabwurf nach einem der voranstehenden Ansprüche, dadurch gekennzeichnet, daß das Dämpferelement (30) als Faltenbalg-Zylinder ausgebildet ist.

8. Lastenabsetz-Plattform zur Dämpfung von Lasten beim Lastenabwurf nach einem der Ansprüche 1 bis 6, dadurch gekennzeichnet, dass das Gewebe (35) aus Teilen gebildet ist, die gegeneinander überlappend auf vulkanisiert sind, um beim Zusammenfahren des Dämpferelements (30) ein vorbestimmtes Zusammenlegen des Gewebes (35) zu erreichen, wobei der Durchlaßring (37) mittig zwischen dem oberen (31) und dem unteren (32) Befestigungsring angeordnet ist.

9. Lastenabsetz-Plattform nach einem der voranstehenden Ansprüche, dadurch gekennzeichnet, dass zumindest eine der Platten (3,5) an zumindest einem ihrer Seitenränder mit Befestigungsmitteln versehen ist, um daran eine weitere Lastenabsetz-Plattform zu befestigen.
